# EUROPEAN PATENT SPECIFICATION

(11) **EP 0 231 122 B1**
(45) Date of publication and mention of the grant of the patent: **14.04.1993**
(21) Application number: 87300734.8
(22) Date of filing: 28.01.1987
(51) Int. Cl.: C08K 3/30, C08K 3/40, C08L 59/00

(54) **Colored composition of polyacetal**
Gefärbte Polyacetalzusammensetzung
Composition de polyacétal colorée

(30) Priority: 31.01.1986 JP 19264/86
(43) Date of publication of application: 05.08.1987
(73) Proprietor: POLYPLASTICS CO. LTD., Higashi-ku Osaka (JP); DAINICHI SEIKA KOGYO K.K., Tokyo (JP)
(72) Inventor: Hamada, Shinpei, Kashihara-shi Nara (JP); Takeyama, Ryuji, Osaka-shi Osaka (JP); Momoi, Yasutaka, Ikoma-shi Nara (JP); Kondoh, Masaki, Aichi-gun Aichi (JP)
(74) Representative: Livsey, Gilbert Charlesworth Norris

(56) References cited:
- GB-A- 1 054 522
- CHEMICAL ABSTRACTS, vol. 92, 1980, page 120, abstract no. 131005c, Columbus, Ohio, US
- CHEMICAL ABSTRACTS, vol. 77, 1972, page 36, abstract no. 102728a, Columbus, Ohio, US
- CHEMICAL ABSTRACTS, vol. 82, 1975, page 77, abstract no. 59074y, Columbus, Ohio, US
- BARKER & PRICE: "POLYACETALS", 1970, pages 136-139, chapter 9, The Plastics Institute, GB; "Colouring and decorating"
- KATZ & HILEWSKI: "Handbook of fillers and reinforcement for plastics", 1979, pages 175-176, chapter 2.4.2, Van Nostrand Rheinhold Company, NY, US; "Zinc sulfide, ZnS"

## Description

This invention relates to colored polyacetal resin compositions and, more particularly, to a polyacetal composition colored by zinc sulfide as a white pigment and having excellent mechanical properties.

Polyacetal resins are widely used in the manufacture of various molded parts, such as machine parts, electrical and electronic parts, and other industrial components, because they have good moldability and well balanced thermal, chemical, physical, mechanical, and electrical characteristics. In their uses, these parts are required to have good appearance; and accordingly they are often colored with colorants. Various kinds of dyes and pigments are used for this purpose, and more particularly, a white pigment is used as a pigment ingredient with a view to providing an elegant and soft color tone; indeed, there are many cases where such pigment is indispensable for the purpose of providing not only white color, but various other color tones as well. Generally, titanium oxide is well known as a white pigment for use with thermoplastic resins for such purpose, since titanium oxide has such high spreadability that even a slight amount thereof can provide a very clear definition of whiteness; as a matter of fact, titanium oxide is exclusively used as a white pigment ingredient with polyacetal resins.

Generally, however, where titanium oxide is added as a white pigment ingredient to a polyacetal resin, whether the resin is a homopolymer or a copolymer, the difficulty is that it has undesirable effects on the molded part in respect of mechanical properties, such as tensile strength and elongation, flexural properties, and impact properties, that is, lowered performance values in these characteristic aspects; this has been a great drawback of the conventional white color toning with polyacetal resins. Besides titanium oxide, there are many inorganic substances which can give some white color tone effect, such as for example, metallic carbonate, metallic sulfate, and metallic oxide. With these inorganic substances, it is possible to provide some degree of whitening, but they are generally so inferior in spreadability that they have to be added in much larger quantities than titanium oxide. In addition, these inorganics are often likely to adversely affect the molded part in not only mechanical properties but also in surface appearance and other characteristic properties. Further, where certain color tones are involved, it is often impossible to provide the required toning effect through admixture of such inorganics irrespective of their quantities. In view of the fact that polyacetal resins are often loaded with various types of glass fillers for improvement and modification of their mechanical properties, and since such glass-filled polyacetal resins are particularly liable to property deterioration under the presence of titanium oxide, there has been a great need for elimination of the property deterioration difficulty with glass filled polyacetal resins in connection with white color toning thereof.

In such situation, the present inventors made extensive studies in search for a white pigment which is highly spreadable so that a slight amount thereof can give sufficient tinting effect and elegant color tone without producing such harmful effect as titanium oxide does on the mechanical properties of polyacetal resins, and as a result they arrived at the present invention, thus achieving the objects to which their research efforts were directed.

This invention relates to a polyacetal resin composition having as a pigment ingredient 0.01 to 10% by weight of zinc sulfide and up to 60% by weight of a glass filler, said percentages being relative to the composition as a whole. It provides a polyacetal resin composition and, more particularly, a polyacetal resin composition reinforced by admixture of various types of glass fillers, which is toned to white color without deterioration being caused to the mechanical properties of the resin composition. In the present invention, zinc sulfide refers to a white colored metallic salt and such mineral as sphalerite or one having a sphaleritic structure; it has a high degree of specific refractivity which is satisfactory for polyacetal resins. In order to provide a good color effect and spreadability, the zinc sulfide should be of such fine particle size that it can almost completely pass through a sieve opening of 0.1 mm dia., and preferably such that is can pass through a 0.05 mm sieve opening, its mean particle diameter being of the order of 0.01 mm or less. For the purpose of the present invention, the zinc sulfide may be incorporated with the aid of a dispersant of such known type as is used with any common pigment, or preferably it may be incorporated by adding a dispersant in conjunction with the zinc sulfide, then melting and kneading the composite. The content of the zinc sulfide ingredient incorporated is 0.01 ∼ 10 % by weight relative to the composition as a whole. If it is less than 0.01 wt %, it makes little difference from the conventional pigment of titanium oxide and does not provide any of its normal advantages. The zinc sulfide exhibits a remarkable advantage over titanium oxide particularly when it is used in a relatively large amount; preferably, the proportion of the zinc sulfide as a pigment ingredient is 0.05 ∼ 5 wt %.

For the base of the composition according to the invention, any polyacetal resin may be effectively used whether it is of the homopolymer or copolymer type which is widely in industrial use today or of such other type as crosslinked, grafted, or block copolymer. No particular consideration is required as to the viscosity (molecular weight) of such resin except where it is abnormal. The polyacetal resin is preferably one which has undergone a stabilizing step, though stabilization may be accomplished to some extent during the stage of melting and kneading zinc sulfide and other necessary ingredients.

The composition according to the invention is useful for the purpose of coloring a polyacetal resin containing no such inorganic filler as above mentioned, and more particularly it is effective where it is reinforced and modified by incorporating a glass filler thereinto. For the glass filler, fibrous glass, lamellar glass, spherical glass, milled fiber glass, and powdery glass may be equally effectively employed, and the size and configuration of such filler may be freely selected according to the object for which the composition is used. It is also possible to use two or more kinds of such glass fillers having different configurations in conjunction with one another, thereby to develop their composite effects. That is, loading of glass fibers provides increased rigidity; glass fibers exhibit very high strength in certain directions, but are liable to deformation such as warpage. On the other hand, lamellar glass, spherical glass, and powdery glass are inferior to glass fiber in strength in certain directions, but because of their lack of directional property these glasses are not liable to warpage or the like deformation during and after molding; as such, they are useful in that they provide good dimensional stability and high rigidity. Further, by suitably mixing the former and the latter it is possible to incorporate a combination of their respective advantages into the composition. Glass filler loadings, from the standpoint of composition preparation and moldability, should be not more that 60% by weight.

Generally, the advantage of zinc sulfide over titanium oxide pigment in the retention of mechanical strength, etc. is more significant where the glass filler content is greater. For the purpose of the invention, zinc sulfide and glass fillers may be used as they are, but by surface treating them in advance with any known sizing agent, surface treating agent, or coupling agent, for example, a functional compound, such as epoxy compound, isocyanate compound or silane compound, or more particularly, a multifunctional compound, or by admixing them together with a functional compound and melt kneading the mixture, it is possible to further enhance the effects of ingredients of the composition according to the invention.

Concrete examples of functional compounds available for this purpose are epoxy silanes, such as γ-glycidoxy propyl triethoxysilane, γ-glycidoxy propyl trimethoxysilane, and β-(3,4-epoxycyclohexyl) ethyl trimethoxysilane; polyepoxy compound, such as bisphenol A epoxy resin, bisohenol F epoxy resin, resorcin-type epoxy resin, tetrahydroxyphenyl methane epoxy resin, novolak-type epoxy resin, vinyl cyclohexene dioxide, dicyclopentadiene dioxide, and 3,4-epoxy-6-methyl dihexylmethyl-3,4-epoxy-6-methyl cyclohexane carbonate; isocyanate compounds, such as 2,4-tolylene diisocyanate, 4,4'-diphenylmethane diisocyanate, dianisidine diisocyanate, tridene diisocyanate, hexamethylene diisocyanate, methaxylylene diisocyanate, 1,3-naphthalene diisocyanate, triphenyl methane triisocyanate, polyphenyl isocyanate, and derivatives of aforesaid diisocyanates (polymer urethane, higher oligomer than urethadione dimer, cyanurate polymer); amino silanes, such as γ-aminopropyl triethoxy silane, and β-aminoethoxy-γ-aminopropyl trimethoxy silane; vinyl trichlorosilane, vinyl triethoxysilane, vinyl tris-β-methoxyethoxysilane, γ-methacrylo propyl trimethoxysilane, n-(dimethoxy methylsilyl propyl) ethylenediamine, and n-(trimethoxysilyl propyl) ethylenediamine. Loadings of such functional compounds should be 0.01 ∼ 10 parts by weight, preferably 0.05 ∼ 5 parts by weight relative to the total weight or 100 parts of the composition.

There is no particular limitation on how to prepare the composition of the invention; any conventional method may be employed for the purpose. For example, it is possible to employ any of the following methods: one method such that essential ingredients for the composition are mixed together, the mixture being then pelletized by melt extrusion; another method such that some of the ingredients are separately added at suitable stages in the preparation process; another method such that a certain kind of ingredient, e.g., zinc sulfide, is melt kneaded in a high concentration with the polyacetal resin in order to prepare a master pellet, which pellet is mixed with a polyacetal resin composition during molding operation, the mixture being thus molded directly into a molded part of the composition according to the invention; and another method such that zinc sulfide is mixed with a polyacetal resin composition previously prepared in pellet form, so that the former is deposited on the surface of the latter, the product being then directly molded into a colored molded part.

### [Examples]

To illustrate the advantages of the composition according to the invention, the following examples are given:

### Examples 1 ∼ 4 and Comparative Examples 1 ∼ 4

To polyacetal copolymer resin (Duracon M9002'' produced by the Polyplastics Co.) were respectively added zinc sulfide (in Examples) and titanium oxide (in Comparative Examples) in the quantities shown in Table 1, and the mixtures each was blended and melt extruded into pellets. Tensile test pieces and impact test pieces were molded from these pellets and they were subjected to tensile tests and Izod impact tests according to ASTM test methods D638 and D256. The test results are shown in Table 1.

**Table 1**

| Example | Pigment | Pigment loadings (wt %) | Tensile strength (kg/cm²) | Tensile elongation (%) | Izod impact strength, notched (kgcm/cm) |
|---|---|---|---|---|---|
| Reference | - | - | 650 | 68 | 6.5 |
| Example 1 | Zinc sulfide | 0.1 | 651 (100) | 67 (99) | 6.5 (100) |
| Comp. Example 1 | Titanium oxide | 0.1 | 618 ( 95) | 63 (93) | 6.0 ( 92) |
| Example 2 | Zinc sulfide | 0.5 | 650 (100) | 67 (99) | 6.4 ( 98) |
| Comp. Example 2 | Titanium oxide | 0.5 | 598 ( 92) | 61 (89) | 5.8 ( 89) |
| Example 3 | Zinc sulfide | 1.0 | 644 ( 99) | 67 (98) | 6.3 ( 97) |
| Comp. Example 3 | Titanium oxide | 1.0 | 565 ( 87) | 57 (84) | 5.5 ( 84) |
| Example 4 | Zinc sulfide | 2.0 | 637 ( 98) | 66 (97) | 6.3 ( 97) |
| Comp. Example 4 | Titanium oxide | 2.0 | 527 ( 81) | 52 (77) | 5.1 ( 78) |
| (Note) Values in parentheses represent retention rates (%) relative to the case of pigment non-loading. | | | | | |

### Examples 5 ∼ 9 and Comparative Examples 5 ∼ 9

To 75 parts by weight of same polyacetal resin as aforesaid were added for mixture 25 parts by weight of glass fibers (having a length of about 6 mm and a mean diameter of about 9µ) surface treated with γ-glycidoxypropyltrimethoxysilane and collected, and a pigment, that is, zinc sulfide (in Examples) or titanium oxide (in Comparative Examples), as the case may be, in such quantities as shown in Table 2, and the mixture in each case was melt kneaded and extruded into pellets. Tensile and impact test pieces similar to those as aforesaid were molded from these pellets and they were subjected to tensile tests and Izod impact tests. The test results are shown in Table 2.

**Table 2**

| Example | Pigment | Pigment loadings (wt %) | Tensile strength (kg/cm²) | Tensile elongation (%) | Izod impact strength, notched (kgcm/cm) |
|---|---|---|---|---|---|
| Reference | - | - | 1100 | 2.5 | 4.7 |
| Example 5 | Zinc sulfide | 0.05 | 1103 (100) | 2.5 (100) | 4.7 (100) |
| Comp. Example 5 | Titanium oxide | 0.05 | 1101 ( 91) | 2.1 ( 85) | 3.9 ( 82) |
| Example 6 | Zinc sulfide | 0.1 | 1101 (100) | 2.5 (100) | 4.7 (100) |
| Comp. Example 6 | Titanium oxide | 0.1 | 979 ( 89) | 2.0 ( 81) | 3.8 ( 80) |
| Example 7 | Zinc sulfide | 0.5 | 1090 ( 99) | 2.5 (100) | 4.6 ( 98) |
| Comp. Example 7 | Titanium oxide | 0.5 | 924 ( 84) | 1.8 ( 78) | 3.5 ( 74) |
| Example 8 | Zinc sulfide | 1.0 | 1089 ( 99) | 2.5 ( 98) | 4.6 ( 98) |
| Comp. Example 8 | Titanium oxide | 1.0 | 902 ( 82) | 1.7 ( 69) | 3.3 (70) |
| Example 9 | Zinc sulfide | 2.0 | 1078 ( 98) | 2.4 ( 97) | 4.5 ( 97) |
| Comp. Example 9 | Titanium oxide | 2.0 | 858 ( 78) | 1.6 ( 64) | 3.0 ( 65) |
| (Note) Values in parentheses represent retention rates relative to the case of pigment non-loading. | | | | | |

### Examples 10 ∼ 12 and Comparative Examples 10 ∼ 12

59 parts by weight of same polyacetal resin as aforesaid, 20 parts by weight of glass fibers (having a length of about 6 mm and a mean diameter of about 9µ) surface treated with amino silane and collected, 20 % by weight of glass beads (having a mean particle diameter of about 30µ) surface treated with amino silane, and 1.0 part by weight of diphenylmethane diisocyanate, were mixed together and melt kneaded and extruded by an extruder into pellets. To these pellets were added, in various proportions, separate pellets (pigment master pellets) which had been prepared by mixing 10 % by weight of zinc sulfide or titanium oxide, as the case may be, and 90 % by weight of aforesaid polyacetal resin, and extruding the mixture. The so mixed pellets were directly molded into test pieces similar to those as aforesaid, and tests were conducted in same manner as aforesaid. The test results are shown in Table 3. In Table 3, the pigment contents represent those of the individual post-molding compositions.

**Table 3**

| Example | Pigment | Pigment loadings (wt %) | Tensile strength (kg/cm²) | Tensile elongation (%) | Izod impact strength, notched (kgcm/cm) |
|---|---|---|---|---|---|
| Reference | - | - | 1210 | 5.1 | 5.8 |
| Example 10 | Zinc sulfide | 0.1 | 1211 (100) | 5.1 (100) | 5.8 (100) |
| Comp. Example 10 | Titanium oxide | 0.1 | 1064 ( 88) | 4.2 ( 82) | 4.7 ( 81) |
| Example 11 | Zinc sulfide | 0.5 | 1198 ( 99) | 5.1 (100) | 5.7 ( 98) |
| Comp. Example 11 | Titanium oxide | 0.5 | 1016 ( 84) | 3.7 ( 73) | 4.2 ( 73) |
| Example 12 | Zinc sulfide | 1.5 | 1186 ( 98) | 4.9 ( 97) | 5.6 ( 97) |
| Comp. Example 12 | Titanium oxide | 1.5 | 968 ( 80) | 3.4 ( 66) | 3.9 ( 67) |
| (Note) Values in parentheses represent retention rates relative to the case of pigment non-loading. | | | | | |

### [Advantages of the Invention]

As may be clearly understood from the above description and examples given, the present invention, wherein zinc sulfide is used as a pigment in coloring in white color tone a polyacetal resin composition and, more particularly, a polyacetal resin composition loaded with glass fillers, enables the colored composition to retain good physical and mechanical properties comparable to those in the case of pigment non-loading, without causing such deterioration in mechanical properties which has been a serious problem with the case of coloring polyacetal resins with titanium oxide or the like as conventionally used. Furthermore, the use of zinc sulfide provides excellent color tone and high spreadability, eliminates the necessity of using the pigment in such large quantity as in the case of other white color additives, and also eliminates surface roughening possibilities. Thus, it is possible to obtain a white colored polyacetal composition having good appearance and color tone and excellent mechanical properties.

## Claims

1. A colored composition of polyacetal consisting of a polyacetal, 0.01 to 10 percent by weight of zinc sulfide and up to 60% by weight of a glass filler.

2. A polyacetal resin composition as set forth in Claim 1 wherein the zinc sulfide content of the composition is 0.05 to 5 % by weight.

3. A polyacetal resin composition as set forth in Claim 1 or 2 wherein the glass filler consists of one or more kinds of glass material selected from the group consisting of fibrous glass, lamellar glass, milled fiber glass, spherical glass, which may be surface-treated in advance, or admixed and melt kneaded with a functional compound composed of one or more kinds of material selected from the group consisting of epoxy compounds, isocyanate compounds and silane compounds.

## Patentansprüche

1. Farbige Polyacetalzusammensetzung, umfassend ein Polyacetal, 0,01 bis 10 Gew.-% Zinksulfid und bis zu 60 Gew.-% Glasfüllstoff.

2. Polyacetalharz-Zusammensetzung, nach Anspruch 1, worin der Zinksulfidanteil in der Zusammensetzung 0,05 bis 5 Gew.-% beträgt.

3. Polyacetalharz-Zusammensetzung, nach Anspruch 1 oder 2, worin der Glasfüllstoff aus einer oder mehreren Glassorten besteht, die aus der Gruppe von Glasfasern, Lamellenglas, Kurzfaserglas, Glaskugeln, ausgewählt wurden, die zuvor oberflächenbehandelt sein können, oder beigemischt und aus einer Schmelze geknetet, und dann mit einer funktionellen Verbindung behandelt werden, die aus einer oder mehreren Stoffarten aus der Gruppe der Epoxid-, Isocyanat- und Silanverbindungen ausgewählt wurde.

## Revendications

1. Composition colorée à base de polyacétal constituée d'un polyacétal, de 0,01 à 10% en poids de sulfure de zinc et jusqu'à 60% d'une charge de verre.

2. Composition de résine à base de polyacétal selon la revendication 1, dans laquelle la teneur de sulfure de zinc de la composition est de 0,05 à 5% en poids.

3. Composition de résine à base de polyacétal selon la revendication 1 ou 2, dans laquelle la charge de verre est constituée d'un ou plusieurs types de matériaux de verre choisis dans le groupe constitué des fibres de verre, du verre lamellaire, des fibres de verre broyées, des sphères de verre qui peuvent être traités en surface d'avance, ou malaxés et mélangés au fondu avec un composé fonctionnel constitué d'un ou plusieurs types de produits choisis dans le groupe constitué des composés époxydes, des composés isocyanates et des composés silanes.
